# EUROPEAN PATENT SPECIFICATION

(11) **EP 3 687 755 B1**
(45) Date of publication and mention of the grant of the patent: **01.04.2026**
(21) Application number: 18782203.6
(22) Date of filing: 17.09.2018
(51) Int. Cl.: B29C 44/28, B29C 44/44, B29C 59/04, B29C 44/50, B29C 44/34, B24B 37/24, B24B 37/26, B24D 18/00, B29C 48/00, B29C 48/94, C08J 9/08, C08J 9/36

(54) **POLYMERIC FOAM LAYER AND METHODS OF MAKING THE SAME**
POLYMERSCHAUMSTOFFSCHICHT UND VERFAHREN ZUR HERSTELLUNG DAVON
COUCHE DE MOUSSE POLYMÈRE ET PROCÉDÉS DE FABRICATION ASSOCIÉS

(30) Priority: 29.09.2017 US 201762565773 P
(43) Date of publication of application: 05.08.2020
(73) Proprietor: 3M Innovative Properties Company, Saint Paul, Minnesota 55133-3427 (US)
(72) Inventor: SLAMA, David F., Saint Paul, Minnesota 55133-3427 (US); ANTILA, Garth V., Saint Paul, Minnesota 55133-3427 (US); HANSEN, Brent R., Saint Paul, Minnesota 55133-3427 (US); HANSCHEN, Thomas P., Saint Paul, Minnesota 55133-3427 (US); JENNEN, Jay M., Saint Paul, Minnesota 55133-3427 (US); KALISH, Jeffrey P., Saint Paul, Minnesota 55133-3427 (US); LEHUU, Duy K., Saint Paul, Minnesota 55133-3427 (US); MCNULTY, Jason D., Saint Paul, Minnesota 55133-3427 (US); MEREE, Caitlin E., Saint Paul, Minnesota 55133-3427 (US); RULE, Joseph D., Saint Paul, Minnesota 55133-3427 (US)
(74) Representative: Mathys & Squire
(86) International application number: PCT/IB2018/057122
(87) International publication number: WO 2019/064121

(56) References cited:
- EP-A1- 1 616 902
- GB-A- 1 088 383
- US-A- 5 650 215
- US-A1- 2003 082 362
- US-A1- 2005 276 967
- US-B1- 6 620 495

## Description

### Background

Foam products are commonly made by injection molding or by forming a large block of foam and then cutting the block into sheets. Converting processes such as convoluted cutting, hot wire, machining, and contour cutting is commonly used to provide shapes on surfaces of the sheets. Such shaped surfaces typically exhibit open cells.

Another common approach to making shaped foam is to cast a foamed film onto a casting roll to create a smooth surface foamed film. To create three-dimensional features, the film can be embossed, thereby compressing sections of the film. The cells in the compressed areas are crushed, permanently damaging the cell structure.

A third approach to making shaped foam is by profile extrusion, wherein foamed polymer is extruded through a profile die having the desired contour shape cut in the die. The resulting contoured foam shape is continuous in the down web direction. Uses of such shaped foams include gasket seals.

Alternative polymeric foams and/or methods for making polymeric foams are desired.

### Summary

In one aspect, the present disclosure describes a polymeric foam layer having a thickness up to 25,700 micrometers (in some embodiments, in a range from 100 micrometers to 1000 micrometers, 1000 micrometers to 6000 micrometers, 6000 micrometers to 12,700 micrometers or even 12,700 micrometers to 25,400 micrometers), having first and second opposed major surfaces, and comprising foam features extending from or into the first major surface by at least 100 micrometers (in some embodiments, in a range from 100 micrometers to 1000 micrometers, 1000 micrometers to 6000 micrometers, 6000 micrometers to 12,700 micrometers or even 12,700 micrometers to 25,400 micrometers), and having a glass transition temperature, T_{g}, in a range from -125°C to 150°C (in some embodiments, in a range from -125°C to -10°C, -10°C to 80°C, 50°C to 150°C or even 50°C to 80°C), wherein the first and second opposed major surfaces are free of exposed internal porous cells (i.e., less than 10 percent of the surface area of each of the first and second major surface has any exposed porous cells) and wherein at least 40 (in some embodiments, at least 55, 60, 65, 70, 75, 80, 85, 90, 95, 96, 97, 98, 99, or even 100) percent by area of each major surface has an as-cured surface.

In another aspect, the present disclosure describes a first method of making a polymeric foam layer described herein, the method comprising:
providing a rotating tool roll having a major circumferential surface and an extrusion die with a die lip spaced in proximity of the tool roll to form a gap between the tool roll and the extrusion die; and
introducing a polymer comprising a foaming agent onto a portion of the major circumferential surface of the tool roll, wherein the portion of the major circumferential surface is in proximity of the die lip to provide the polymeric foam layer.

In another aspect, the present disclosure describes a second method of making a polymeric foam layer described herein, the method comprising:
providing a rotating tool roll having a major circumferential surface and an extrusion die with a die lip spaced in proximity of the tool roll to form a gap between the tool roll and the extrusion die; and
introducing a polymer comprising a gas onto a portion of the major circumferential surface of the tool roll, wherein the portion of the major circumferential surface is in proximity of the die lip, wherein a gas is injected into the polymer at least one of prior to or during contact of the polymer with the portion of the major circumferential surface of the tool roll and, wherein the polymer foams to provide the polymeric foam layer.

In another aspect, the present disclosure describes a third method of making a polymeric foam layer described herein, the method comprising:
providing a rotating tool roll having a major circumferential surface and an extrusion die with a die lip spaced in proximity of the tool roll to form a gap between the tool roll and the extrusion die; and
introducing a polymer comprising polymeric microspheres onto a portion of the major circumferential surface of the tool roll, wherein the portion of the major circumferential surface is in proximity of the die lip and wherein the polymer foams to provide the polymeric foam layer.

In another aspect, the present disclosure describes a fourth method of making a polymeric foam layer described herein, the method comprising:
providing a rotating tool roll having a major circumferential surface;
providing an extrusion die with a die lip spaced in proximity of the tool roll to form a gap between the tool roll and the extrusion die;
providing a compression roll in proximity of the tool roll to form a gap between the tool roll and the compression roll;
injecting oil into a polymer comprising at least one of a foaming agent, a gas, or polymeric microspheres in an extrusion chamber; and
extruding the polymer into the gap between the extrusion die and the tool roll, wherein the polymer foams to provide the polymeric foam layer.

In another aspect, the present disclosure describes a fifth method of making a polymeric foam layer described herein, the method comprising:
providing a rotating tool roll having a major circumferential surface and an extrusion die with a die lip spaced in proximity of the tool roll to form a gap between the tool roll and the extrusion die; and
introducing reactive polymer onto a portion of the major circumferential surface of the tool roll, wherein the portion of the major circumferential surface is in proximity of the die lip and wherein the reactive polymer foams and at least partially polymerizes to provide the polymeric foam layer.

In another aspect, the present disclosure describes a sixth method of making a polymeric foam layer described herein, the method comprising:
providing a rotating tool roll having a major circumferential surface and an extrusion die with a die lip spaced in proximity of the tool roll to form a gap between the tool roll and the extrusion die; and
providing an extruder connected to the extrusion die;
introducing a reactive monomer into the extruder, wherein the reactive monomer at least partially polymerizes in the extruder and the extrusion die to form a polymer; and
introducing the polymer from the extrusion die onto a portion of the major circumferential surface of the tool roll, wherein a portion of the major circumferential surface is in proximity of the die lip and wherein the polymer foams to provide the polymeric foam layer.

Exemplary uses of polymeric foam layers described herein including vibration damping and polishing applications (e.g., polishing pads useful in chemical mechanical planarization (CMP)).

### Brief Description of the Drawings

FIG. 1 is an exemplary apparatus for the first method of making a polymeric foam layer described herein.
FIG. 2 is an exemplary apparatus for the second method of making a polymeric foam layer described herein.
FIG. 3 is an exemplary apparatus for the third method of making a polymeric foam layer described herein.
FIG. 4 is an exemplary apparatus for the fourth method of making a polymeric foam layer described herein.
FIG. 5 is an exemplary apparatus for the fifth method of making a polymeric foam layer described herein.
FIG. 6 is an exemplary apparatus for the sixth method of making a polymeric foam layer described herein.

### Detailed Description

Polymeric foam layers described herein have a glass transition temperature, T_{g}, in a range from - 125°C to 150°C (in some embodiments, in a range from -125°C to -10°C, -10°C to 80°C, 50°C to 150°C or even 50°C to 80°C). The glass transition temperature is determined as follows, using a differential scanning calorimeter (DSC) available under the trade designation "Q2000 DSC" from TA Instruments, New Castle, DE. The DSC procedure is as follows: cool sample to -180°C, temperature ramp at 10°C/min. to 300°C. The glass transition temperature is recorded as the inflection point in the heat flow versus temperature curve.

In some embodiments, polymeric foam layers described herein comprise a thermoplastic material. Exemplary thermoplastic materials include a polycarbonate, a polyacrylic, a polymethacrylic, an elastomer, a styrenic block copolymer, a styrene-isoprene-styrene (SIS), a styrene-ethylene/butylene-styrene block copolymer (SEBS), a polybutadiene, a polyisoprene, a polychloroprene, a random copolymer of styrene and diene styrene-butadiene rubber (SBR), a block copolymer of styrene and diene styrene-butadiene rubber (SBR), an ethylene-propylene-diene monomer rubber, a natural rubber, an ethylene propylene rubber, a polyethylene-terephthalate (PET), a polystyrene-polyethylene copolymer, a polyvinylcyclohexane, a polyacrylonitrile, a polyvinyl chloride, a thermoplastic polyurethane, an aromatic epoxy, an amorphous polyester, an amorphous polyamides, a semicrystalline polyamide, an acrylonitrile-butadiene-styrene (ABS) copolymer, a polyphenylene oxide alloy, a high impact polystyrene, a polystyrene copolymer, a polymethylmethaerylate (PMMA), a fluorinated elastomer, a polydimethyl siloxane, a polyetherimide, an amorphous fluoropolymer, an amorphous polyolefin, a polyphenylene oxide, a polyphenylene oxide-polystyrene alloy, or mixtures thereof.

In some embodiments, polymeric foam layers described herein comprise a mixture of at least one of a copolymer comprising at least one amorphous component. In some embodiments, polymeric foam layers described herein comprise a polyethylene, a polypropylene, a polymethylpentene, a polyisobutylene, a polyolefin copolymer, a polyamide (e.g., polyamide 6 and polyamide 66), a polyethylene tereplitiatate, a polyethylene-terephtlatate copolymer, a fluoropolymer, a poly vinyl acetate, a poly vinyl alcohol, a polyethylene oxide, a functionalized polyolefin, an ethylene vinyl acetate copolymer, a polyvinylidene fluoride, a polytetrafluoroethylene, a polyformaldehyde, a polyvinyl butyral, a copolymer thereof, or mixtures thereof. In some embodiments of polymeric foam layers described herein, the thermoplastic is an amorphous or semi-crystalline polymer or copolymer.

In some embodiments of polymeric foam layers described herein, the polymer has a gel content in a range from 1 to 95 (in some embodiments, in a range from 1 to 90, 1 to 85, 1 to 80, 1 to 75, 1 to 70, 5 to 90, 5 to 85, 5 to 80, 5 to 75, 5 to 70, 10 to 90, 10 to 85, 10 to 80, 10 to 75, 10 to 70, 20 to 90, 20 to 85, 20 to 80, 20 to 75, 20 to 70, 25 to 90, 25 to 85, 25 to 80, 25 to 75, or even 25 to 70. The gel content of the polymer is determined as follows: Pieces of wire cloth (316 stainless steel, 120 x 120 mesh; available from McMaster-Carr, Elmhurst, IL) are cut to 8 cm x 4 cm and folded in half to make a square measuring 4 cm. Two sides of this square are closed by folding the mesh at the edges about 0.7 cm and stapling those folds. In this manner, a cage (3 cm x 4 cm) open at the top is obtained. Place foam sample to be tested, weighing in a range from 0.18 gram to 0.22 gram and seal it in the cage. Submerge the cage, with the foam sample sealed in it, in refluxing tetrahydrofuran. After 24 hours, remove the cage and dry it under vacuum at 70°C for four hours. Then weigh the sample remaining in the cage and divide that weight by the original weight of the sample to determine the gel content of the foam.

In some embodiments, polymeric foam layers described herein have a Shore D value of at least 35 (in some embodiments, at least 40, 50, 60, 70, 75, 80, 90, or even at least 100; (in some embodiments in a range from 35 to 100, 40 to 80, or 80 to 100). The Shore D hardness of the films is determined \, using a Shore D/Shore A durometer Scale digital hardness tester, available under the trade designation "SHORE D/SHORE A DUROMETER SCALE DIGITAL HARDNESS TESTER," by gently compressing the instrument into the foam, being careful not to deform the surface of the foam. In some embodiments, polymeric foam layers described herein have a compressive stress versus compressive strain value of at least 1 (in some embodiments, at least 5, 10, 100, 1000, or even at least 6000; in some embodiments, in a range from 1 to 50, 50 to 500, or even 500 to 6000) MPa. In some embodiments, polymeric foam layers described herein have a compressive stress versus compressive strain value less than 1 (in some embodiments, at least 5, 10, 100, 1000, or even at least 6000; in some embodiments, in a range from 1 to 50, 50 to 500, or even 500 to 6000) MPa. The compressive stress and compressive strain of polymeric foam is determined using a mechanical testing machine available under the trade designation "UNIVERSAL TESTING SYSTEMS 3300" from Instron, Norwood, MA. A polymeric foam sample, either circular or square in cross-section, is placed between two rigid metal plates of the mechanical testing machine ("UNIVERSAL TESTING SYSTEMS 3300"). The plates compress the sample at a rate of 0.1 inch/min. (2.54 mm/min.) until 75% compression strain is reached. During testing, a calibrated load cell records the force needed to compress the sample, resulting in a force vs. displacement (or stress vs. strain) graph.

In some embodiments, polymeric foam layers described herein have a yield stress of at least 0.01 (in some embodiments, at least 0.1, 0.5, 1, 5, or even 10; (in some embodiments, in a range from 0.01 to 0.1, 0.1 to 1, or even 1 to 100) MPa. In some embodiments, polymeric foam layers described herein have a yield stress less than 100 (in some embodiments, less than 10, 5, 1, or even 0.1; in some embodiments, in a range from 0.01 to 1, 1 to 10, or even 10 to 100) MPa. The yield stress is determined by placing a point along the x-axis (strain) at 0.2% strain and then from that point extending a line parallel to the initial linear portion of the stress vs. strain curve. The intersection of these two lines is the yield stress.

In some embodiments, polymeric foam layers described herein have a durometer value less than 20 on the Shore A scale (in some embodiments, at least 20, 15, 10, or even 5; (in some embodiments in a range from 1 to 5, 1 to 20, or even 1 to 50). The durometer value of polymeric foam is determined using a Shore D/Shore A durometer scale digital hardness tester available under the trade designation "SHORE D/SHORE A DUROMETER SCALE DIGITAL HARDNESS TESTER." The hardness is determined by gently compressing the instrument into the foam, being careful not to deform the surface of the foam.

In some embodiments, polymeric foam layers described herein can be wrapped around a 1 m (in some embodiments, 75 cm, 50 cm, 25 cm, 10 cm, 5 cm, 1 cm, 5 mm, or even 1 mm) diameter rod without breaking.

In some embodiments of polymeric foam layers described herein, the features comprise at least one of the following shapes: a cone, a cube, a pyramid, a continuous rail, continuous multi-directional rails, a hemisphere, a cylinder, or a multi-lobed cylinder. In some embodiments, the features have a cross-section in at least one of the following shapes: a circle, a square, a rectangle, a triangle, a pentagon, other polygon, a sinusoidal, a herringbone, or a multi-lobe.

In some embodiments, polymeric foam layers described herein have porosity therein having an average cell size (i.e., pore size) in a range from 10 to 3000 (in some embodiments, 10 to 2000, 10 to 1000, 10 to 500, or even 10 to 100) micrometers.

In some embodiments, polymeric foam layers described herein have a total porosity of at least 5 (in some embodiments, at least 10, 20, 25, 30, 40, 50, 60, or even at least 70; in some embodiments, in a range from 10 to 70, 10 to 60, or even 10 to 50) percent, based on the total volume of the polymeric foam layer.

In some embodiments, polymeric foam layers described herein comprise a star polymer. Exemplary star polymer comprises at least one of styrene isoprene styrene (SIS), styrene ethylene propylene styrene (SEPS), styrene ethylene butadiene styrene (SEBS), or styrene butadiene styrene (SBS) (including mixtures thereof). Suitable star polymers are available, for example, under the trade designation "KRATON" from Kraton, Houston, TX.

In some embodiments, polymeric foam layers described herein comprise a reinforcement material (e.g., a woven, a nonwoven, fibers, a mesh, or a film).

In some embodiments, polymeric foam layers described herein comprise at least one of glass beads, glass bubbles, glass fibers, abrasive grain, carbon black, carbon fibers, diamond particles, composite particles, nanoparticles, mineral oil, tackifier, wax, rubber particles or flame retardant.

In some embodiments, polymeric foam layers described herein comprise a thermal conductive material (e.g., BN).

According to the invention the method of making a polymeric foam layer described herein comprises:
providing a rotating tool roll having a major circumferential surface and an extrusion die with a die lip spaced in proximity of the tool roll to form a gap between the tool roll and the extrusion die; and
introducing a polymer comprising a foaming agent onto a portion of the major circumferential surface of the tool roll, wherein the portion of the major circumferential surface is in proximity of the die lip to provide the polymeric foam layer.

According to the invention, the major circumferential surface of the compression roll comprises an array of cavities. In some embodiments, the first method the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the first method of making a polymeric foam layer described herein, the foaming agent comprises at least one of an acid (e.g., citric acid), bicarbonate, azodicarbonamide, modified azodicarbonamide, hydrazide, sodium bicarbonate and citric acid blend, dinitrosopentamethylenetetramine, p-toluenesulfonyl hydrazide, 4-4'-oxybis hydrazide, azodicarbonamide, p-toluenesulfonyl semicarbazide, 5-phenyltetrazole, 5-phenyltetrazole analogues, diisopropylhydrazodicarboxylate, 5-phenyl-3,6-dihydro-1,3,4-oxadiazin-2-one, or sodium borohydride.

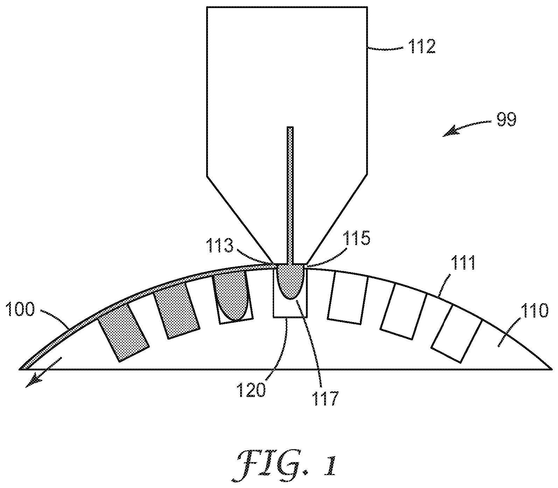

Referring to FIG. 1, apparatus 99 has rotating tool roll 110 with major circumferential surface 111 and extrusion die 112 with die lip 113 spaced in proximity of tool roll 110 to form gap 115 between tool roll 110 and extrusion die 112. Polymer 117 comprising a foaming agent is injected onto portion 120 of major circumferential surface 111 tool roll 110. Portion 120 of major circumferential surface 111 is in proximity of die lip 113. Polymer 117 foams to provide polymeric foam layer described herein 100.

According to the invention the method of making a polymeric foam layer described herein comprises:
providing a rotating tool roll having a major circumferential surface and an extrusion die with a die lip spaced in proximity of the tool roll to form a gap between the tool roll and the extrusion die; and
introducing a polymer comprising a gas onto a portion of the major circumferential surface of the tool roll, wherein the portion of the major circumferential surface is in proximity of the die lip, wherein a gas is injected into the polymer at least one of prior to or during contact of the polymer with the portion of the major circumferential surface of the tool roll and, wherein the polymer foams to provide the polymeric foam layer.

In some embodiments of the second method of making a polymeric foam layer described herein, the major circumferential surface of the tool roll comprises an array of cavities. In some embodiments of the second method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the second method of making a polymeric foam layer described herein, the gas comprises at least one of argon, carbon dioxide, nitrogen, a butane (e.g., n-butane and isobutane), a heptane (e.g., n-heptane, isoheptane, and cycloheptane), a hexane (e.g., n-hexane, neohexane, isohexane, and cyclohexane), an octane (e.g., n-octane and cyclooctane), or a pentane (e.g., n-pentane, cyclopentane, neopentane, and isopentane).

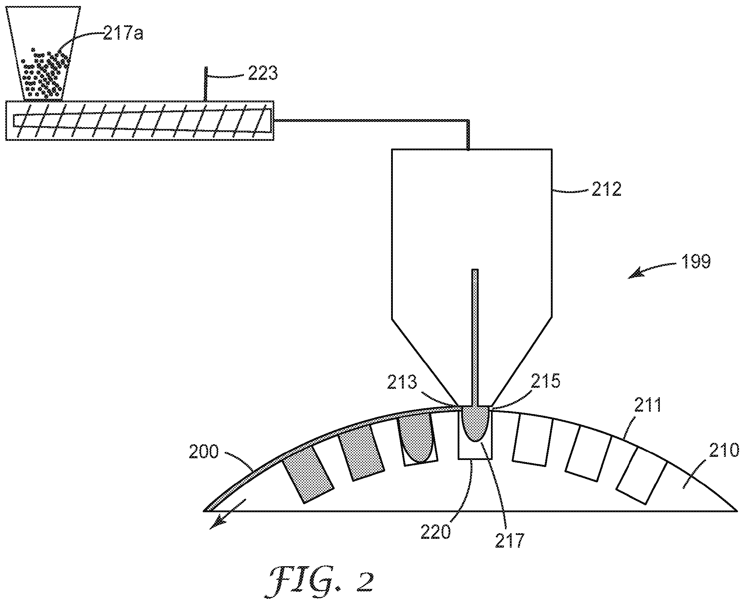

Referring to FIG.2, apparatus 199 has rotating tool roll 210 with major circumferential surface 211 and extrusion die 212 with die lip 213 spaced in proximity of tool roll 210 to form gap 215 between tool roll 210 and extrusion die 212. Polymer 217 comprising a gas is injected onto portion 220 of major circumferential surface 211 of tool roll 210. Portion 220 of major circumferential surface 211 is in proximity of die lip 213. Gas 223 is injected into polymer 217a at least one of prior to or during contact of polymer 217 with portion 220 of major circumferential surface 211 of tool roll 210. Polymer 217 foams to provide polymeric foam layer described herein 200.

The third method of making a polymeric foam layer described herein comprises:
providing a rotating tool roll having a major circumferential surface and an extrusion die with a die lip spaced in proximity of the tool roll to form a gap between the tool roll and the extrusion die; and
introducing a polymer comprising polymeric microspheres onto a portion of the major circumferential surface of the tool roll, wherein the portion of the major circumferential surface is in proximity of the die lip and wherein the polymer foams to provide the polymeric foam layer.

In some embodiments of the third method of making a polymeric foam layer described herein, the major circumferential surface of the tool roll comprises an array of cavities. In some embodiments of the third method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the third method of making a polymeric foam layer described herein, the polymeric microspheres comprise expanding bubbles. Exemplary expanding bubbles are available, for example, under the trade designations "EXPANCEL" from AkzoNobel, Amsterdam, Netherlands, or "DUALITE" from Chase Corporation, Westwood, MA.

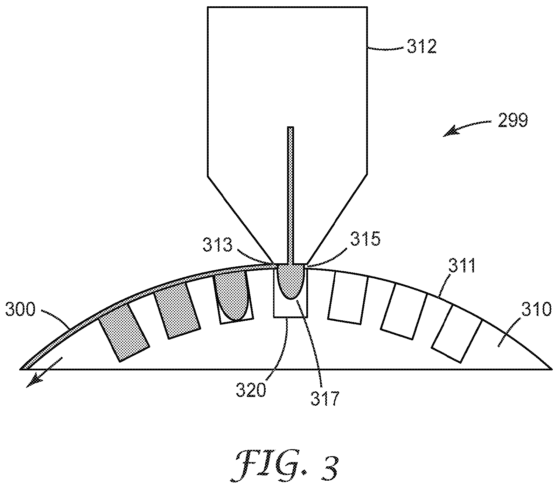

Referring to FIG. 3, apparatus 299 has rotating tool roll 310 with major circumferential surface 311 and extrusion die 312 with die lip 313 spaced in proximity of tool roll 310 to form gap 315 between tool roll 310 and extrusion die 312. Polymer 317 comprising polymeric microspheres is injected onto portion of major circumferential surface 311 of tool roll 310. Portion 320 of major circumferential surface 311 is in proximity of die lip 313. Polymer 317 foams to provide the polymeric foam layer described herein 300.

The fourth method of making a polymeric foam layer described herein comprises:
providing a rotating tool roll having a major circumferential surface;
providing an extrusion die with a die lip spaced in proximity of the tool roll to form a gap between the tool roll and the extrusion die;
providing a compression roll in proximity of the tool roll to form a gap between the tool roll and the compression roll;
injecting oil into a polymer comprising at least one of a foaming agent, a gas, or polymeric microspheres in an extrusion chamber; and
extruding the polymer into the gap, wherein the polymer foams to provide the polymeric foam layer.

In some embodiments of the fourth method of making a polymeric foam layer described herein, the major circumferential surface of the tool roll comprises an array of cavities. In some embodiments of the fourth method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the fourth method of making a polymeric foam layer described herein, the method further comprises a compression roll having a major circumferential surface positioned near the extrusion die, downweb.

In some embodiments of the fourth method of making a polymeric foam layer described herein, the oil comprises at least one of a lanolin, a liquid polyacrylate, a liquid polybutene, a mineral oil, or a phthalate.

In some embodiments of the fourth method of making a polymeric foam layer described herein, the foaming agent comprises at least one of an acid (e.g., citric acid), a bicarbonate, an azodicarbonamide, a modified azodicarbonamide, a hydrazide, a sodium bicarbonate and citric acid blend, dinitrosopentamethylenetetramine, p-toluenesulfonyl hydrazide, 4-4'-oxybis hydrazide, azodicarbonamide, p-toluenesulfonyl semicarbazide, 5-phenyltetrazole, a 5-phenyltetrazole analogue, diisopropylhydrazodicarboxylate, 5-phenyl-3,6-dihydro-1,3,4-oxadiazin-2-one, or sodium borohydride.

In some embodiments of the fourth method of making a polymeric foam layer described herein, the gas comprises at least one of argon, carbon dioxide, nitrogen, a butane (e.g., n-butane and isobutane), a heptane (e.g., n-heptane, isoheptane, and cycloheptane), a hexane (e.g., n-hexane, neohexane, isohexane, and cyclohexane), an octane (e.g., n-octane and cyclooctane), or a pentane (e.g., n-pentane, cyclopentane, neopentane, and isopentane).

In some embodiments of the fourth method of making a polymeric foam layer described herein, the polymeric microspheres comprise expanding bubbles. Exemplary expanding bubbles are available, for example, under the trade designation "EXPANCEL" from AkzoNobel or "DUALITE" from Chase Corporation.

In some embodiments of the fourth method of making a polymeric foam layer described herein, the oil is at a temperature greater than 80°C (in some embodiments, at least 90°C, 100°C, 125°C, 150°C, 175°C, or even, at least 200°C; in some embodiments, in a range from 80°C to 250°C, 100°C to 250°C, or even 100°C to 200°C).

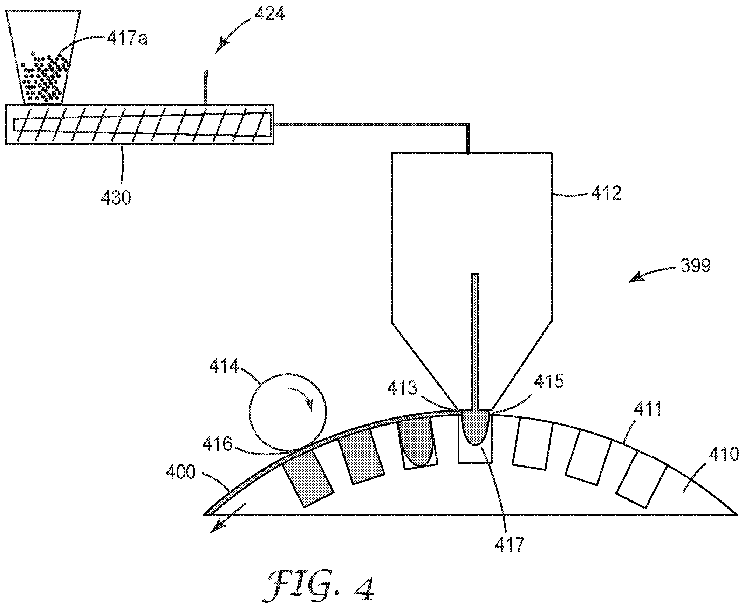

Referring to FIG. 4, apparatus 399 has rotating tool roll 410 having major circumferential surface 411, extrusion die 412 with die lip 413 spaced in proximity of tool roll 410 to form gap 415 between tool roll 410 and extrusion die 412. Compression roll 414 in proximity of tool roll 410 to form gap 416 between tool roll 410 and compression roll 414. Oil 424 is injected into polymer 417a comprising at least one of foaming agent, a gas, or polymeric microspheres in extrusion chamber 430. Polymer 417 is extruded into gap 415. Polymer 417 foams to provide polymeric foam layer described herein 400.

The fifth method of making a polymeric foam layer described herein comprises:
providing a rotating tool roll having a major circumferential surface and an extrusion die with a die lip spaced in proximity of the tool roll to form a gap between the tool roll and the extrusion die; and
introducing reactive polymer onto a portion of the major circumferential surface of the tool roll, wherein the portion of the major circumferential surface is in proximity of the die lip and wherein the reactive polymer foams and at least partially polymerizes to provide the polymeric foam layer.

In some embodiments of the fifth method of making a polymeric foam layer described herein, the reactive polymer reacts after forming to increase the molecular weight of the polymeric foam layer. In some embodiments of the fifth method, the reactive polymer reacts to crosslink the polymeric foam layer. In some embodiments of the fifth method, the reactive polymer reacts with moisture to cause polymerization or crosslinking of the polymeric foam layer. In some embodiments of the fifth method, the reactive polymer comprises isocyanate functional groups, alkoxysilane functional groups, or ketimine functional groups.

In some embodiments of the fifth method of making a polymeric foam layer described herein, the reactive polymer comprises at least one of a (meth)acrylic functional group, an allyl functional group, or a vinyl functional group.

In some embodiments of the fifth method of making a polymeric foam layer described herein includes exposing the reactive polymer to at least one of gamma radiation, E-beam radiation, or UV-radiation to cause at least one of polymerization or crosslinking of the polymeric foam layer.

In some embodiments of the fifth method of making a polymeric foam layer described herein, the major circumferential surface of the tool roll comprises an array of cavities. In some embodiments of the fifth method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

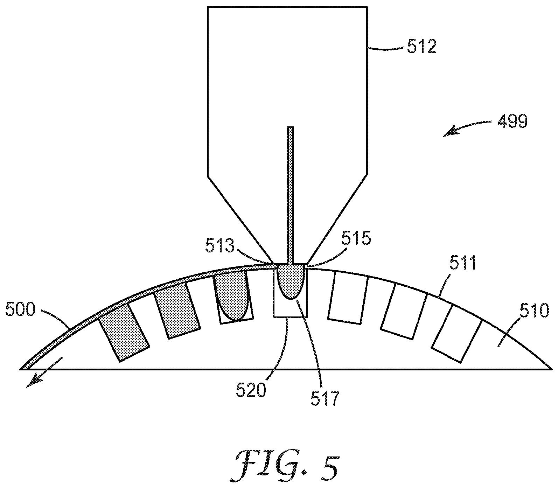

In some embodiments of the fifth method of making a polymeric foam layer described herein, the method further comprises a compression roll having a major circumferential surface positioned near the extrusion die, downweb. Referring to FIG. 5, apparatus 499 has rotating tool roll 510 having major circumferential surface 511 and extrusion die 512 with die lip 513 spaced in proximity of tool roll 510 to form gap 515 between tool roll 510 and extrusion die 512. Reactive polymer 517 is injected onto portion 520 of major circumferential surface 511 of tool roll 510. Portion 520 of major circumferential surface 511 is in proximity of die lip 513. Reactive polymer 517 foams and at least partially polymerizes to provide the polymeric foam layer described herein 500.

The sixth method of making a polymeric foam layer comprises:
providing a rotating tool roll having a major circumferential surface and an extrusion die with a die lip spaced in proximity of the tool roll to form a gap between the tool roll and the extrusion die; and
providing an extruder connected to the extrusion die;
introducing a reactive monomer into the extruder, wherein the reactive monomer at least partially polymerizes in the extruder and extrusion die to form a polymer; and
injecting the polymer from the extrusion die onto a portion of the major circumferential surface of the tool roll, wherein a portion of the major circumferential surface is in proximity of the die lip and wherein the polymer foams to provide the polymeric foam layer.

In some embodiments of the sixth method of making a polymeric foam layer described herein further comprises injecting a reactive polymer into the extruder with the reactive monomer, wherein the monomer has a molecular weight, and wherein the monomer at least partially reacts with the reactive polymer to form a polymer having a higher molecular weight than the molecular weight of the monomer.

In some embodiments of the sixth method of making a polymeric foam layer described herein, the reactive monomer comprises a polyisocyanate and a polyol, and wherein the polymer formed from the reaction of the monomer and the reactive polyisocyanate is a polyurethane. In some embodiments of the sixth method, the reactive monomer further comprises a hydroxyl-functional chain extender. In some embodiments of the sixth method, the ratio by number of isocyanate equivalents hydroxyl equivalents is in a range from is 1:1.01 to 1:1.2 (in some embodiments, in a range from 1:1.01 to 1:1.1 to 1:1.05, 1:1.05 to 1:1.0, or 1:1.0 to 1:1.2). In some embodiments of the sixth method, at least one of the polyol or the polyisocyanate has an average functionality of greater than 2.0.

In some embodiments of the sixth method of making a polymeric foam layer described herein, the major circumferential surface of the tool roll comprises an array of cavities. In some embodiments of the sixth method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the sixth method of making a polymeric foam layer described herein, the method further comprises a compression roll having a major circumferential surface positioned near the extrusion die, downweb.

In some embodiments of the sixth method of making a polymeric foam layer described herein, the polymer comprises a foaming agent. In some embodiments of the sixth method, the foaming agent comprises polymer microspheres. In some embodiments of the sixth method of making a polymeric foam layer, the polymer microspheres are expandable bubbles. In some embodiments of the sixth method, the foaming agent comprising at least one of an acid, bicarbonate, azodicarbonamide, modified azodicarbonamide, hydrazide, sodium bicarbonate and citric acid blend, dinitrosopentamethylenetetramine, p-toluenesulfonyl hydrazide, 4-4'-oxybis hydrazide, azodicarbonamide, p-toluenesulfonyl semicarbazide, 5-phenyltetrazole, 5-phenyltetrazole analogues, diisopropylhydrazodicarboxylate, 5-phenyl-3,6-dihydro-1,3,4-oxadiazin-2-one, or sodium borohydride. In some embodiments of the sixth method the foaming agent comprises water and isocyanate.

In some embodiments of the sixth method of making a polymeric foam layer described herein, the foaming agent comprises a gas comprising at least one of argon, carbon dioxide, nitrogen, a butane (e.g., n-butane and isobutane), a heptane (e.g., n-heptane, isoheptane, and cycloheptane), a hexane (e.g., n-hexane, neohexane, isohexane, and cyclohexane), an octane (e.g., n-octane and cyclooctane), or a pentane (e.g., n-pentane, cyclopentane, neopentane, and isopentane).

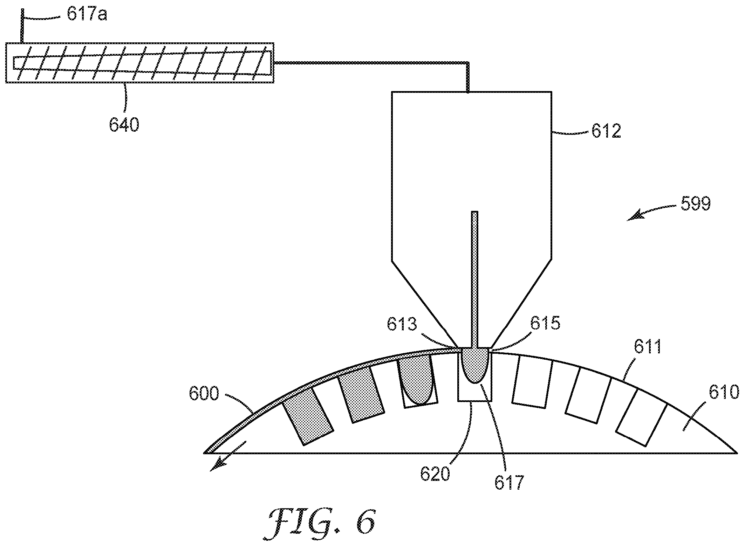

Referring to FIG. 6, apparatus 599 has rotating tool roll 610 having major circumferential surface 611 and extrusion die 612 with die lip 613 spaced in proximity of tool roll 610 to form gap 615 between tool roll 610 and extrusion die 612. Extruder 640 is connected to extrusion die 612. Reactive monomer 617a is injected into extrude 640. Reactive monomer 617a at least partially polymerizes in extruder 640 and extrusion die 612 to form polymer 617. Polymer 617 is injected onto a portion of major circumferential surface 611 of tool roll 610. Portion 620 of major circumferential surface 611 is in proximity of die lip 613. Polymer 617 foams to provide the polymeric foam layer described herein 600.

The present disclosure also described a method of providing an article, the method comprising;
providing a polymeric foam layer of any A Exemplary Embodiment; and
applying at least one of heat or pressure to permanently deform at least one protrusion of the polymeric foam layer. For example, a polymeric foam layer described herein can be passed through a nip provided by two rotating metal rolls, wherein protrusions of the polymeric foam layer wrap around one of the nip rolls that is heated (e.g., electrically heated) sufficient to deform the protrusions in contact with the roll, and where in the other nip roll is at a lower temperature (typically ambient temperature).

The apparatus can be made of conventional materials and techniques known in the art for apparatuses of these general types.

Exemplary uses of polymeric foam layers described herein include vibration damping and polishing applications (e.g., polishing pads useful in chemical mechanical planarization (CMP)).

Further to CMP polishing applications, the polishing pad thickness may coincide with the required thickness to enable polishing on the appropriate polishing tool. In some embodiments, the polishing pad thickness is greater than 125 (in some embodiments, greater than 150, 200 or even greater than 500; in some, less than 40,000, 30,000, 20,000, 15,000, 10,000, 5,000 or even less than 2,500) micrometers. The polishing pad may be in any of a variety of shapes (e.g., circular, square, or hexagonal). The pads may be fabricated such that the pad shape coincides with the shape of the corresponding platen of the polishing tool the pad will be attached to during use. The maximum dimension of the pad (e.g., the diameter for a circular shaped pad) can be as desired for a particular application. In some embodiments, the maximum dimension of a pad is at least 10 cm (in some embodiments, at least 20 cm, 25 cm, 30 cm, 40 cm, 50 cm, or even, at least 60 cm; in some embodiments, less than 2 meters, 1.5 meter, or even less than 1 meter).

In some polishing pad embodiments, the foam features extend from or into the first major surface by at least 100 micrometers (in some embodiments, at least 200 micrometers or even by at least 300 micrometers; in some embodiments, up to 20,000 micrometers, 15,000 micrometers, 10,000 micrometers or even up to 5,000 micrometers).

The polymeric foam layer of the polishing pad may further include at least one channel, wherein the channel has a depth greater than the distance the foam features extend from or into the first major surface. In some embodiments, the polymeric foam layer of the polishing pad may further include at least a plurality of channels, wherein at least a portion of the plurality of channels has a depth greater than the distance the foam features extend from or into the first major surface. The at least one channel may provide improved polishing solution distribution, polymeric foam layer flexibility, as well as facilitate swarf removal from the polishing pad. In some embodiments, the channels do not allow fluid to be contained indefinitely within the channel (i.e., fluid can flow out of the channel during use of the pad).

In some embodiment, the width of the at least one channel is at least 10 (in some embodiments, at least 25, 50, 75, or even at least 100; in some embodiments less than 20,000, 10,000, 5,000, 2,000, 1,000, 500, or even less than 200) micrometers. In some embodiments, the depth of the at least one channel is at least 125 (in some embodiments, at least 200, 300, 400, 500, 600, 700, 800, 900, 1,000, 1500, or even at least 2,000; in some embodiments, less than 25,000, 20,000, 15,000, 10,000, 8,000, 5,000, 3,000, or even less than 1,000) micrometers.

The channels may be formed into the polishing layer by any known techniques in the art including, but not limited to, machining, embossing and molding. The channels may be formed during the formation of the polymeric foam layer and/or by the same process used to form the polymeric foam layer. Due to improved surface finish on the first major surface of the polishing foam layer (which helps minimize substrate defects (e.g., scratches during use)), embossing and molding may be preferred. In some embodiments, the channels extending from or into the first major surface of the polymeric foam layer are fabricated in the molding process used to form the foam features. This is achieved by forming their negative (i.e., raised regions) in the tool roll, with the channels themselves then being formed in the polymeric foam layer during molding. This is of particular advantage, as the foam features extending from or into the first major surface of the polymeric foam layer and the at least one channel may be fabricated into the polishing foam layer in a single process step, leading to cost and time savings. The channels can be fabricated to form various patterns known in the art (e.g., concentric rings, parallel lines, radial lines, a series of lines forming a grid array, herring bone, and spiral). Combinations of differing patterns may be used.

In yet another embodiment, the polishing pad of the present disclosure may include a subpad, wherein the subpad is adjacent to the second major surface of the polymeric foam layer. The polishing pad layers (e.g., polymeric foam layer and subpad, may be adhered together by any techniques known in the art (including using adhesives (e.g., pressure sensitive adhesives (PSAs), hot melt adhesives and cure in place adhesives)). In some embodiments, the polishing pad includes an adhesive layer adjacent to the second major surface of the polymeric foam layer. Use of a lamination process in conjunction with PSAs (e.g., PSA transfer tapes) is one particular process for adhering the polishing pad and subpad. The subpad may be any of those known in the art. The subpad may be a single layer of a substantially rigid material (e.g., polycarbonate) or a single layer of a substantially compressible material (e.g., an elastomeric foam). The subpad may also have at least two layers, and may include a substantially rigid layer (e.g., a stiff material or high modulus material (e.g., polycarbonate or polyester)) and a substantially compliant layer (e.g., an elastomer or an elastomeric foam material). If the subpad includes a substantially compliant layer (e.g., an elastomeric foam layer, the compliant layer may have a durometer in a range from 20 Shore D to 90 Shore D). In some embodiments, the compliant layer has a thickness in a range from 125 to 5,000 (in some embodiments, in a range from 125 to 1000) micrometers.

In some embodiments of polishing pads that include a subpad having at least one opaque layer, a small (e.g., 1 cm to 5 cm) hole may be cut into the subpad creating a "window". The hole may be cut through the entire subpad or only through at least one opaque layer. The cut portion of the subpad or at least one opaque layer is removed from the subpad, allowing light to be transmitted through this region. The hole is pre-positioned to align with the endpoint window of the polishing tool platen and facilitates the use of the wafer endpoint detection system of the polishing tool, by enabling light from the tool's endpoint detection system to travel through the polishing pad and contact the wafer. Light-based endpoint polishing detection systems are known in the art and are available, for example, under the trade designations "MIRRA" and "REFLEXION LK CMP" from Applied Materials, Inc., Santa Clara, CA. Polishing pads described herein can be fabricated to run on such tools and endpoint detection windows, which are configured to function with the polishing tool's endpoint detection system, can be included in the polishing pad.

In some embodiments, a polishing pad described herein includes subpad laminated thereto. The subpad can include at least one rigid layer (e.g., polycarbonate) and at least one compliant layer (e.g., an elastomeric foam, the elastic modulus of the rigid layer being greater than the elastic modulus of the compliant layer). The rigid layer may be laminated to the second major surface of the polymeric foam layer, typically through the use of a PSA (e.g., transfer adhesive or tape). The compliant layer may be opaque and prevent light transmission required for endpoint detection. Prior to, or after lamination, a hole (e.g., up to 5 cm wide by 20 cm long) may be die cut, for example, by a standard kiss cutting method or cut by hand, in the opaque compliant layer of the subpad. The cut region of the compliant layer is removed creating a "window" in the polishing pad. If adhesive residue is present in the hole, it can be removed, for example, through the use, for example, of an appropriate solvent and/or wiping with a cloth. The "window" in the polishing pad is configured such that, when the polishing pad is mounted to the polishing tool platen, the window of the polishing pad aligns with the endpoint detection window of the polishing tool platen. The dimensions of the hole are generally the same or similar in dimension to the dimensions of the endpoint detection window of the platen.

The polishing pad, including any one of polymeric foam layers, the subpad and any combination thereof, may include a window (i.e., a region allowing light to pass through) to enable standard endpoint detection techniques used in polishing processes (e.g. wafer endpoint detection).

The present disclosure also describes a polishing system comprising at least one polishing pad and at least one polishing solution. Suitable polishing solutions are known in the art. The polishing solutions may be aqueous or non-aqueous. An aqueous polishing solution has at least 50% by weight water. A non-aqueous solution has less than 50% by weight water. In some embodiments, the polishing solution is a slurry (i.e., a liquid that contains organic and/or inorganic abrasive particles). The concentration of organic and/or inorganic abrasive particles in the polishing solution is as desired. In some embodiments, the concentration of organic and/or inorganic abrasive particles in the polishing solution is at least 0.5% (in some embodiments, at least 1%, 2%, 3%, 4%, or even at least 5%, in some embodiments, less than 30%, 20%, 15%, or even less than 10%) by weight. In some embodiments, the polishing solution is substantially free of organic and/or inorganic abrasive particles. By "substantially free of organic or inorganic abrasive particles," it is meant that the polishing solution contains not greater than 0.5% (in some embodiments, not greater than 0.25%, 0.1%, or even not greater than 0.05%) by weight of organic and/or inorganic abrasive particles. In some embodiments, the polishing solution contain no organic and no inorganic abrasive particles. The polishing system may include polishing solutions (e.g., slurries, used for silicon oxide CMP (e.g., shallow trench isolation CMP), metal CMP (e.g., tungsten CMP, copper CMP, and aluminum CMP), barrier CMP (e.g., tantalum and tantalum nitride CMP), and hard substrates (e.g., sapphire). In some embodiments, the polishing system further comprises a substrate to be polished or abraded.

The present disclosure also describes a method of polishing a substrate, the method comprising:
providing a polishing pad described herein having a working surface;
providing a substrate having a first surface;
contacting the first working surface of the polishing pad with the first substrate surface; and
moving the polishing pad and the substrate relative to one another while maintaining contact between the working surface of the polishing pad and the first substrate surface,
wherein polishing is conducted in the presence of a polishing solution.

In some embodiments, the polishing solution is a slurry as previously described herein. In some embodiments, the substrate is a semiconductor wafer. Exemplary semiconductor wafers comprise at least one of a dielectric material, an electrically conductive material, a barrier and/or adhesion material or a cap material. Exemplary dielectric materials include an inorganic dielectric material (e.g., glass (e.g., silica glasses)) or an organic dielectric material. Exemplary electrically conductive materials include metals (e.g., at least one of copper, tungsten, aluminum, or silver). Exemplary cap materials include at least one of silicon carbide or silicon nitride. Exemplary barrier and/or adhesion materials include at least one of tantalum or tantalum nitride. The method of polishing may also include a pad conditioning or cleaning step, which may be conducted in-situ (i.e., during polishing). Pad conditioning may use any pad conditioner (e.g., a diamond pad conditioner), or brush known in the art and is available, for example, under the trade designations "3M CMP PAD CONDITIONER BRUSH PB33A" from the 3M Company, St. Paul, MN, and/or a water or solvent rinse of the polishing pad.

Kinetic spacer layers found in damping laminates are effective in improving the damping performance of a dissipative layer. Minimizing weight is a major need in many industries, especially transportation. Through a foamed kinetic spacer of the polymeric foam layer described herein, reductions in both weight and complexity of manufacturing are achievable. While rigid foams can be machined to have spacer elements, minimizing the inherent waste and extra processing steps greatly simplifies the production of such structures.

The engine, drive train and other portions of a vehicle (e.g., automobiles, airplanes, and motorboats) can generate mechanical vibrations that propagate through the body of the vehicle as structure borne noise. Such structure born noise can transform into air borne noise. It can be useful to damp these structural vibrations before their kinetic energy is radiated as air borne noise into other vehicle areas (e.g., inside a passenger compartment).

Typically, viscoelastic materials such as bitumen or sprayed plastic masses (i.e., single layer damping material) are coated or otherwise applied onto, for example, the surface of a body panel of a vehicle for damping these structural vibrations. The deformation of the body panel and attached viscoelastic layer can lead to stretching and/or compressing of the polymer chains within the viscoelastic material, resulting in the dissipation of mechanical energy in the form of, for example, structural borne vibration (e.g., from the engine, tire/road interactions, compressors, and fans) and the damping of vibrations.

Better damping performance can be achieved by adding a second layer to the damping material, a constraining layer (constrained layer damping (CLD)). The constraining layer is selected such that it is not as elastic as the viscoelastic material layer and may be attached on top of the viscoelastic material layer or dissipating layer opposite of the panel to be damped. The constraining layer may be made, for example, out of aluminum. When the constraining layer is attached on top of the viscoelastic material layer, each deformation of the panel leads not only to stretching and compressing of the polymer chains within the dissipating layer but also to shear within the dissipating layer. Thus, the damping material with an additional constraining layer is more effective than the damping material with only the dissipating layer.

The materials used for constraining layer add weight to the damping material which tends to be undesirable when used, for example, in a vehicle. Such materials also add bending stiffness to the damping material, which may lead to challenges, when applying the CLD material to complex shaped structures.

The efficiency of damping material can also be enhanced when the deformation of the viscoelastic damping layer or dissipating layer is amplified by a "kinetic spacer" or "stand-off" layer. The stand-off layer is usually arranged between the panel to be damped and the constraining layer, typically with a viscoelastic dissipating layer on one or both sides of it. One way to improve the efficiency is to increase the strain within the dissipating layer(s) by using a kinetic spacer layer.

In some embodiments, the kinetic spacer elements have a height in the range of from 0.1 mm to 15 mm. In some embodiments, the base layer has a thickness within the range of from zero (no base layer present) up to 3 mm.

In some embodiments, the ratio of the height of the kinetic spacer elements (i.e., in the thickness direction of the kinetic spacer layer) to the height, or thickness, of the base material may be, for example, greater than 1.1:1, (in some embodiments, greater than 1.5:1, 2:1, 3:1, 4:1, 5:1, 10:1, 15:1, or even greater than 20:1). It tends to be desirable for the kinetic spacer elements to have a greater height so that at least one end of each spacer element is embedded in, is bonded to, is in contact with, or is in close proximity to the dissipating layer. Such an arrangement tends to facilitate movement of the spacer, allowing it to interact with the dissipating layer so that energy is dissipated within the multilayer material. It can be desirable for each kinetic spacer element to have a height/width aspect ratio in the range of from 0.3:1 to 20:1. In general, the performance of the kinetic spacer layer can decrease as the height/width ratio of the spacer elements increases, performance can increase as the height/width ratio of the spacer elements decreases.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Example 1

Example 1 was made using an apparatus as generally shown in FIG. 1. The extrusion die was 20.3 cm (8 inches) wide (obtained under the trade designation "MASTERFLEX" (Model LD-40) from Cloeren, Orange, TX) configured with the die positioned on the top of the tool roll at top dead center. The die was orientated such that the bottom of the die was on the trailing edge of the tooling roll. The bottom die lip had a 3.18 mm (0.125 inch) land. The extruder was a 3.2 cm (1.25 inch) single screw extruder (obtained under the trade designation "HILLION" from Davis-Standard, Pawcatuck, CT). The die temperature set points used are shown in Table 1, below.

**Table 1**

| Heating Zones | 3.18 cm (1.25 inch) Killion, °C (°F) | Extrusion Die, °C (°F) |
|---|---|---|
| Zone 1 | 190 (375) | 176 (350) |
| Zone 2 | 210 (410) | 176 (350) |
| Zone 3 | 215 (420) | 176 (350) |
| Zone 4 | 176 (350) | |
| End cap | 176 (350) | |
| Neck Tube | 176 (350) | |
| Extruder RPM | 57 | |

A single tooling roll station was used with the die mounted at the top dead center of the roll. The die was mounted on linear slides to move in the up and down direction. The roll was nominally 30.5 cm (12 inch) in diameter with a 40.6 cm (16 inch) face width. The tooling roll had internal water cooling with spiral wound internal channels. A 32.4 cm (12.75 inch) outside diameter aluminum tooling shell was mounted onto the outer surface roll.

The linear motion of the die was controlled by linear actuators to move the die and to control the gap between the die lip and tooling roll. The tooling roll had through holes drilled through the aluminum shell. The holes were 1.55 mm (0.061 inch) in diameter at the surface and tapered in with a 6-degree angle along the wall of the hole. The holes were spaced 3.8 mm (0.15 inch) apart on center in both directions. The tooling roll was set with a cooling temperature set point of 15.6°C (60°F). The gap between the die lip and the tool roll surface was set at 127 micrometers (0.005 inch). The line speed was 1.5 meter (5 feet) per minute.

A polymer was manually premixed prior to being fed into the extruder. The polymer was a resin blend of 97 percent by weight polypropylene (obtained under the trade designation "C700-35N" from Dow Chemical, Midland, MI) and 3 percent by weight blowing agent "ECOCELL H" from Polyfil Corporation, Rockaway, NJ).

A polymeric foam layer was produced with 7 mm tall foamed stems and a foam backing with a density reduction of 30%. The replication did not fully fill the tool therefore the stem tops were rounded.

### Example 2

Example 2 was prepared as described in Example 1, except the polymer was a resin blend of 97 percent by weight (obtained under the trade designation "ZYTEL 101" from Dow Chemical) and 3 percent by weight blowing agent ("ECOCELL H"), the gap between the die lip and the tool roll surface was set at 241 micrometers (0.0095 inch), the line speed was 2.3 meters (7.5 feet) per minute, and the die temperature set points were as shown in Table 2, below.

**Table 2**

| Heating Zones | 3.18 cm (1.25 inch) Killion, °C (°F) | Extrusion Die, °C (°F) |
|---|---|---|
| Zone 1 | 249 (480) | 274 (525) |
| Zone 2 | 274 (525) | 274 (525) |
| Zone 3 | 274 (525) | 274 (525) |
| Zone 4 | 274 (525) | |
| End cap | 274 (525) | |
| Neck Tube | 274 (525) | |
| Extruder RPM | 31.5 | |

A polymeric foam layer was produced with 3 mm (0.118 inch) tall foamed stems and a 130 micrometer (0.005 inch) foam backing with a density reduction of 30%.

### Example 3

The polymeric foam layer of Example 2 was passed through a nip provided by two rotating metal rolls. The protrusions of the polymeric foam layer had a 180 degree wrap on a 15-inch (381 mm) diameter, electrically heated roll, set to 420°F (216°C). The second roll, 11.4-inch (290 mm) diameter, was set to 70°F (21°C). The line speed was 1 meter/minute. The nip gap was 0.89 mil (2.3 mm). The rounded protrusions were reduced from a height of 3.6 mm to flat top protrusions having of a height of 2.6 mm. Further, the top of the protrusions, after passing through the nip, had a greater diameter than the diameter of the protrusion before passing through the nip.

Foreseeable modifications and alterations of this disclosure will be apparent to those skilled in the art without departing from the scope of this invention. This invention should not be restricted to the embodiments that are set forth in this application for illustrative purposes.

## Claims

1. A polymeric foam layer having a thickness up to 25,700 micrometers, having first and second opposed major surfaces, and comprising foam features extending from or into the first major surface by at least 100 micrometers, and having a glass transition temperature, T_{g}, in a range from -125°C to 150°C, wherein less than 10 percent of the surface area of each of the first and second opposed major surfaces has exposed internal porous cells and wherein at least 40 percent by area of each major surface has an as-cured surface.

2. The polymeric foam layer of claim 1 comprising a thermoplastic material.

3. The polymeric foam layer of claim 2, wherein the thermoplastic material comprises a polycarbonate, a polyacrylic, a polymethacrylic, an elastomer, a styrenic block copolymer, a styrene-isoprene-styrene, a styrene-ethylene/butylene-styrene block copolymer, a polybutadiene, a polyisoprene, a polychloroprene, a random copolymer of styrene and diene styrene-butadiene rubber, a block copolymer of styrene and diene styrene-butadiene rubber, an ethylene-propylene-diene monomer rubber, a natural rubber, an ethylene propylene rubber, a polyethylene-terephthalate, a polystyrene-polyethylene copolymer, a polyvinylcyclohexane, a polyacrylonitrile, a polyvinyl chloride, a thermoplastic polyurethane, an aromatic epoxy, an amorphous polyester, an amorphous polyamide, a semicrystalline polyamide, an acrylonitrile-butadiene-styrene copolymer, a polyphenylene oxide alloy, a high impact polystyrene, a polystyrene copolymer, a polymethylmethacrylate, a fluorinated elastomer, a polydimethyl siloxane, a polyetherimide, an amorphous fluoropolymer, an amorphous polyolefin, a polyphenylene oxide, a polyphenylene oxide-polystyrene alloy, or a mixture thereof.

4. The polymeric foam layer of any preceding claim comprising a polyethylene, a polypropylene, a polymethylpentene, a polyisobutylene, a polyolefin copolymer, a polyamide, a polyethylene terephtlatate, a polyethylene-terephtlatate copolymer, a fluoropolymer, a poly vinyl acetate, a poly vinyl alcohol, a polyethylene oxide, a functionalized polyolefin, an ethylene vinyl acetate copolymer, a polyvinylidene fluoride, a polytetrafluoroethylene, a polyformaldehyde, a polyvinyl butyral, a copolymer thereof, or mixtures thereof.

5. The polymeric foam layer of claim 1 comprising a polymer having a gel content in a range from 1 to 95.

6. The polymeric foam layer of any preceding claim having a Shore D value of at least 35.

7. The polymeric foam layer of claim 6 having a compressive stress versus compressive strain value of at least 1 MPa.

8. The polymeric foam layer of any preceding claim having a yield stress of at least 0.01 MPa.

9. The polymeric foam layer of any of claims 1 to 6 having a durometer value less than 20.

10. A multilayer damping material comprising:
at least one constraining layer;
at least one dissipating layer; and
at least one kinetic spacer layer comprising at least one polymeric foam layer of any preceding claim.

11. A method of making a polymeric foam layer, the method comprising:
providing a rotating tool roll having a major circumferential surface and an extrusion die with a die lip spaced in proximity of the tool roll to form a gap between the tool roll and the extrusion die, the major circumferential surface of the rotating tool roll comprising an array of cavities and/or an array of protrusions; and
introducing a polymer comprising one of a foaming agent, a gas, or polymeric microspheres onto a portion of the major circumferential surface of the tool roll, wherein the portion of the major circumferential surface is in proximity of the die lip, wherein the polymer foams to provide the polymeric foam layer of any of claims 1 to 9, and wherein the polymer comprises a gas, said gas is injected into the polymer at least one of prior to or during contact of the polymer with the portion of the major circumferential surface of the tool roll.

12. The method of making a polymeric foam layer according to claim 11, the method further comprising:
providing a compression roll in proximity of the tool roll to form a gap between the tool roll and the compression roll, the compression roll having a major circumferential surface positioned near the extrusion die, downweb;
providing a mixture of the polymer and at least one of a foaming agent, a gas, or polymeric microspheres in an extrusion chamber and injecting oil into said mixture in the extrusion chamber; and
extruding the mixture into the gap between the extrusion die and the tool roll and onto the portion of the major circumferential surface of the tool roll.

13. A polishing pad comprising a polymeric foam layer of any of claims 1 to 9.

14. The polishing pad of claim 13, wherein the polymeric foam layer further comprises at least one channel, wherein the channel has a depth greater than the distance the foam features extend from or into the first major surface.

15. The polishing pad of either claim 13 or 14, further comprising a subpad, wherein the subpad is adjacent to the second major surface of the polymeric foam layer.

## Patentansprüche

1. Eine Polymerschaumschicht, die über eine Dicke von bis zu 25.700 Mikrometern verfügt, über eine erste und eine zweite gegenüberliegende Hauptoberfläche verfügt und aufweisend Schaummerkmale, die sich mindestens 100 Mikrometer von der ersten Hauptfläche erstrecken oder in diese hineinerstrecken, und über eine Glasübergangstemperatur T_{g}, in einem Bereich von -125 °C bis 150 °C verfügt, wobei weniger als 10 Prozent des Oberflächenbereichs jeder der ersten und der zweiten gegenüberliegenden Hauptoberfläche über freiliegende innere poröse Zellen verfügt, und wobei mindestens 40 Prozent der Fläche jeder Hauptoberfläche über eine ausgehärtete Oberfläche verfügt.

2. Die Polymerschaumschicht nach Anspruch 1, aufweisend ein thermoplastisches Material.

3. Die Polymerschaumschicht nach Anspruch 2, wobei das thermoplastische Material ein Polycarbonat, ein Polyacryl, ein Polymethacryl, ein Elastomer, ein Styrol-Blockcopolymer, ein Styrol-Isopren-Styrol, ein Styrol-Ethylen/Butylen-Styrol-Blockcopolymer, ein Polybutadien, ein Polyisopren, ein Polychloropren, ein statistisches Copolymer aus Styrol und Dien-Styrol-Butadienkautschuk, ein Blockcopolymer aus Styrol und Dien-Styrol-Butadienkautschuk, einen Ethylen-Propylen-Dien-Monomerkautschuk, einen Naturkautschuk, einen Ethylen-Propylen-Kautschuk, ein Polyethylenterephthalat, ein Polystyrol-Polyethylen-Copolymer, ein Polyvinylcyclohexan, ein Polyacrylnitril, ein Polyvinylchlorid, ein thermoplastisches Polyurethan, ein aromatisches Epoxidharz, einen amorphen Polyester, ein amorphes Polyamid, ein teilkristallines Polyamid, ein Acrylnitril-Butadien-Styrol-Copolymer, eine Polyphenylenoxid-Legierung oder ein hochschlagfestes Polystyrol, Polystyrol, ein Polystyrol-Copolymer, ein Polymethylmethacrylat, ein fluoriertes Elastomer, ein Polydimethylsiloxan, ein Polyetherimid, ein amorphes Fluorpolymer, ein amorphes Polyolefin, ein Polyphenylenoxid, eine Polyphenylenoxid-Polystyrol-Legierung oder eine Mischung davon aufweist.

4. Die Polymerschaumschicht nach einem der vorstehenden Ansprüche, aufweisend ein Polyethylen, ein Polypropylen, ein Polymethylpenten, ein Polyisobutylen, ein Polyolefin-Copolymer, ein Polyamid, ein Polyethylenterephthalat, ein Polyethylenterephthalat-Copolymer, ein Fluorpolymer, ein Polyvinylacetat, einen Polyvinylalkohol, ein Polyethylenoxid, ein funktionalisiertes Polyolefin, ein EthylenVinylacetat-Copolymer, ein Polyvinylidenfluorid, ein Polytetrafluorethylen, ein Polyformaldehyd, ein Polyvinylbutyral, ein Copolymer davon oder Mischungen davon.

5. Die Polymerschaumschicht nach Anspruch 1, aufweisend ein Polymer, das über einen Gelgehalt in einem Bereich von 1 bis 95 verfügt.

6. Die Polymerschaumschicht nach einem der vorstehenden Ansprüche, die über einen Shore-D-Wert von mindestens 35 verfügt.

7. Die Polymerschaumschicht nach Anspruch 6, die über einen Druckspannungs-Druckverformungs-Wert von mindestens 1 Mpa verfügt.

8. Die Polymerschaumschicht nach einem der vorstehenden Ansprüche, die über eine Streckspannung von mindestens 0,01 MPa verfügt.

9. Die Polymerschaumschicht nach einem der Ansprüche 1 bis 6, die über einen Durometerwert von weniger als 20 verfügt.

10. Ein mehrschichtiges Dämpfungsmaterial, aufweisend:
mindestens eine Beschränkungsschicht;
mindestens eine Abführungsschicht; und
mindestens eine kinetische Abstandshalterschicht, aufweisend mindestens eine Polymerschaumschicht nach einem der vorstehenden Ansprüche.

11. Ein Verfahren zum Herstellen einer Polymerschaumschicht, das Verfahren aufweisend:
Bereitstellen einer rotierenden Werkzeugwalze, die über eine Hauptumfangsoberfläche verfügt, und einer Extrusionsdüse mit einer Düsenlippe, die in einer Nähe der Werkzeugwalze beabstandet ist, um einen Spalt zwischen der Werkzeugwalze und der Extrusionsdüse zu bilden, die Hauptumfangsoberfläche der rotierenden Werkzeugwalze aufweisend eine Anordnung von Hohlräumen und/oder eine Anordnung von Vorsprüngen; und
Einbringen eines Polymers, aufweisend eines von einem Schaummittel, einem Gas oder Polymermikrohohlkugeln, auf einen Abschnitt der Hauptumfangsoberfläche der Werkzeugwalze, wobei der Abschnitt der Hauptumfangsoberfläche in der Nähe der Düsenlippe ist, wobei das Polymer schäumt, um die Polymerschaumschicht nach einem der Ansprüche 1 bis 9 bereitzustellen, und wobei das Polymer ein Gas aufweist, wobei das Gas mindestens eines von vor oder während eines Kontakts des Polymers mit dem Abschnitt der Hauptumfangsoberfläche der Werkzeugwalze in das Polymer eingespritzt wird.

12. Das Verfahren zum Herstellen einer Polymerschaumschicht nach Anspruch 11, das Verfahren aufweisend:
Bereitstellen einer Kompressionswalze in der Nähe der Werkzeugwalze, um einen Spalt zwischen der Werkzeugwalze und der Kompressionswalze zu bilden, wobei die Kompressionswalze über eine Hauptumfangsoberfläche, die in der Nähe der Extrusionsdüse, bahnabwärts positioniert ist, verfügt;
Bereitstellen einer Mischung des Polymers und mindestens eines von einem Schaummittel, einem Gas oder Polymermikrohohlkugeln in einer Extrusionskammer und Einspritzen von Öl in die Mischung in der Extrusionskammer; und
Extrudieren der Mischung in den Spalt zwischen der Extrusionsdüse und der Werkzeugwalze und auf den Abschnitt der Hauptumfangsfläche der Werkzeugwalze.

13. Ein Polierkissen, aufweisend die Polymerschaumschicht nach einem der Ansprüche 1 bis 9.

14. Das Polierkissen nach Anspruch 13, wobei die Polymerschaumschicht ferner mindestens einen Kanal aufweist, wobei der Kanal über eine Tiefe verfügt, die über der Entfernung, die sich die Schaummerkmale von oder in die erste Hauptoberfläche hinein erstrecken, liegt.

15. Das Polierkissen nach Anspruch 13 oder 14, ferner aufweisend ein Unterkissen, wobei das Unterkissen an die zweite Hauptoberfläche der Polymerschaumschicht angrenzt.

## Revendications

1. Couche de mousse polymère ayant une épaisseur allant jusqu'à 25 700 micromètres, ayant des première et seconde surfaces principales opposées, et comprenant des caractéristiques de mousse s'étendant à partir de la première surface principale ou dans celle-ci d'au moins 100 micromètres, et ayant une température de transition vitreuse, T_{g}, dans une plage de -125 °C à 150 °C, dans laquelle moins de 10 pour cent de l'aire de surface de chacune des première et seconde surfaces principales opposées a des cellules poreuses internes exposées et dans laquelle au moins 40 pour cent par aire de chaque surface principale a une surface telle qu'elle a été durcie.

2. Couche de mousse polymère selon la revendication 1 comprenant un matériau thermoplastique.

3. Couche de mousse polymère selon la revendication 2, dans laquelle le matériau thermoplastique comprend un polycarbonate, un polyacrylique, un polyméthacrylique, un élastomère, un copolymère séquencé styrénique, un styrène-isoprène-styrène, un copolymère séquencé styrène-éthylène/butylène-styrène, un polybutadiène, un polyisoprène, un polychloroprène, un copolymère aléatoire de styrène et caoutchouc diène styrène-butadiène, un copolymère séquencé de styrène et de caoutchouc diène styrène-butadiène, un caoutchouc monomère éthylène-propylène-diène, un caoutchouc naturel, un caoutchouc éthylène-propylène, un polyéthylène-teréphtalate, un copolymère polystyrène-polyéthylène, un polyvinylcyclohexane, un polyacrylonitrile, un polychlorure de vinyle, un polyuréthane thermoplastique, un époxy aromatique, un polyester amorphe, un polyamide amorphe, un polyamide semi-cristallin, un copolymère acrylonitrile-butadiène-styrène, un alliage d'oxyde de polyphénylène, un polystyrène à haute résistance aux chocs, un copolymère de polystyrène, un polyméthacrylate de méthyle, un élastomère fluoré, un polydiméthylsiloxane, un polyétherimide, un fluoropolymère amorphe, une polyoléfine amorphe, un oxyde de polyphénylène, un alliage d'oxyde de polyphénylène et de polystyrène, ou un mélange de ceux-ci.

4. Couche de mousse polymère selon l'une quelconque revendication précédente comprenant un polyéthylène, un polypropylène, un polyméthylpentène, un polyisobutylène, un copolymère de polyoléfine, un polyamide, un polyéthylène téréphtalate, un copolymère de polyéthylène téréphtalate, un fluoropolymère, un polyacétate de vinyle, un polyalcool de vinyle, un oxyde de polyéthylène, une polyoléfine fonctionnalisée, un copolymère éthylène-acétate de vinyle, un polyfluorure de vinylidène, un polytétrafluoroéthylène, un polyformaldéhyde, un polybutyral de vinyle, un copolymère de ceux-ci ou des mélanges de ceux-ci.

5. Couche de mousse polymère selon la revendication 1 comprenant un polymère ayant une teneur en gel dans une plage de 1 à 95.

6. Couche de mousse polymère selon l'une quelconque revendication précédente ayant une valeur Shore D d'au moins 35.

7. Couche de mousse polymère selon la revendication 6 ayant une valeur de contrainte de compression par rapport à la déformation de compression d'au moins 1 MPa.

8. Couche de mousse polymère selon l'une quelconque revendication précédente ayant une limite d'élasticité d'au moins 0,01 MPa.

9. Couche de mousse polymère selon l'une quelconque des revendications 1 à 6 ayant une valeur de duromètre inférieure à 20.

10. Matériau d'amortissement multicouche comprenant :
au moins une couche de contrainte ;
au moins une couche de dissipation ; et
au moins une couche de groupe espaceur cinétique comprenant au moins une couche de mousse polymère selon l'une quelconque revendication précédente.

11. Procédé de fabrication d'une couche de mousse polymère, le procédé comprenant :
la fourniture d'un rouleau d'outil rotatif ayant une surface circonférentielle principale et une filière d'extrusion avec une lèvre de filière espacée à proximité du rouleau d'outil pour former un espace entre le rouleau d'outil et la filière d'extrusion, la surface circonférentielle principale du rouleau d'outil rotatif comprenant un réseau de cavités et/ou un réseau de saillies ; et
l'introduction d'un polymère comprenant l'un parmi un agent moussant, un gaz ou des microsphères polymères sur une partie de la surface circonférentielle principale du rouleau d'outil, dans lequel la partie de la surface circonférentielle principale est à proximité de la lèvre de filière, dans lequel le polymère mousse pour fournir la couche de mousse polymère selon l'une quelconque des revendications 1 à 9, et dans lequel le polymère comprend un gaz, ledit gaz est injecté dans le polymère au moins l'un parmi avant ou pendant le contact du polymère avec la partie de la surface circonférentielle principale du rouleau d'outil.

12. Procédé de fabrication d'une couche de mousse polymère selon la revendication 11, le procédé comprenant en outre :
la fourniture d'un rouleau de compression à proximité du rouleau d'outil pour former un espace entre le rouleau d'outil et le rouleau de compression, le rouleau de compression ayant une surface circonférentielle principale positionnée près de la filière d'extrusion, en aval de la bande ;
la fourniture d'un mélange du polymère et d'au moins l'un parmi un agent moussant, un gaz ou des microsphères polymères dans une chambre d'extrusion et l'injection d'huile dans ledit mélange dans la chambre d'extrusion ; et
l'extrusion du mélange dans l'espace entre la filière d'extrusion et le rouleau d'outil et sur la partie de la surface circonférentielle principale du rouleau d'outil.

13. Tampon de polissage comprenant une couche de mousse polymère selon l'une quelconque des revendications 1 à 9.

14. Tampon de polissage selon la revendication 13, dans lequel la couche de mousse polymère comprend en outre au moins un canal, dans lequel le canal a une profondeur supérieure à la distance sur laquelle les caractéristiques de mousse s'étendent à partir de la première surface principale ou dans celle-ci.

15. Tampon de polissage selon la revendication 13 ou 14 comprenant en outre un sous-tampon, dans lequel le sous-tampon est à proximité de la seconde surface principale de la couche de mousse polymère.
